# EUROPÄISCHE PATENTSCHRIFT

(11) **EP 2 319 160 B1**
(45) Veröffentlichungstag und Bekanntmachung des Hinweises auf die Patenterteilung: **04.11.2015**
(21) Anmeldenummer: 09780887.7
(22) Anmeldetag: 21.07.2009
(51) Int. Cl.: H02K 1/22, H02K 21/04

(54) **HYBRIDERREGTE ELEKTRISCHE MASCHINE**
HYBRID-EXCITED ELECTRIC MACHINE
MACHINE ÉLECTRIQUE À EXCITATION HYBRIDE

(30) Priorität: 27.08.2008 DE 102008041605
(43) Veröffentlichungstag der Anmeldung: 11.05.2011
(73) Patentinhaber: Robert Bosch GmbH, 70442 Stuttgart (DE)
(72) Erfinder: BABAJANYAN, Artem, 76532 Baden-Baden (DE); REUTLINGER, Kurt, 70174 Stuttgart (DE)
(86) Internationale Anmeldenummer: PCT/EP2009/059369
(87) Internationale Veröffentlichungsnummer: WO 2010/023039

(56) Entgegenhaltungen:
- EP-A- 0 932 244
- JP-A- 2007 252 071
- US-A- 6 147 429
- US-A1- 2007 090 713
- US-A1- 2007 138 893

## Beschreibung

### Stand der Technik

Die Erfindung geht aus von einer elektrischen Maschine, wie sie in der Offenlegungsschrift US 2007/0090713 A1 beschrieben ist. Eine derartige hybriderregte Synchronmaschine eignet sich insbesondere für die Speisung des Bordnetzes von Kraftfahrzeugen, wobei sie im Generatorbetrieb mit geregelter induzierter Spannung in einem mehrphasigen Ständerwicklungssystem benutzt und die Pole des Rotors permanentmagnetisch und/oder elektrisch erregt werden. Weitere hybriderregte Maschinen sind aus Dokumenten EP 0 932 244 A1, US 6 147 429 und JP 2007-252071 bekannt.

### Offenbarung der Erfindung

Die erfindungsgemäße elektrische Maschine mit den Merkmalen des unabhängigen Anspruchs hat den Vorteil, dass entsprechend den Anforderungen an die Leistungsdichte der Maschine diese zu kleineren Leistungen hin skaliert werden kann, indem anstelle einer Vollbestückung, insbesondere mit Seltenerd-Magneten, wahlweise nur eine Teilbestückung oder eine rein elektrische Erregung des Rotors oder alternativ eine gemischte Bestückung mit Seltenerd-Magneten und Ferritmagneten oder schließlich auch eine Teilbestückung mit Ferrit-Magneten gewählt wird. Die bestückten oder nicht bestückten Aussparungen sind dabei von zwei elektrisch erregten Polen benachbart, die die gleiche Polung aufweisen. Die bevorzugte Bestückung oder Nichtbestückung kann dabei für jeden Maschinentyp, insbesondere unter Kostenaspekten, den Anforderungen an die Leistungsdichte der Maschine angepasst werden, wobei die größte Leistung und/oder die kleinste Bauform bei einer Vollbestückung mit Seltenerd-Magneten und die preiswerteste Ausführung gänzlich ohne permanentmagnetische Bestückung des Rotors erreicht werden. Durch die geblechte Ausführung der Maschine werden hierbei die elektromagnetischen Verluste, die insbesondere im Rotor durch magnetische Oberwellen auftreten, weitgehend vermieden, wobei die gewünschte Gesamtkontur des Rotors mit einem einzigen Blechschnitt realisiert werden kann.

Durch die in den abhängigen Ansprüchen aufgeführten Maßnahmen sind vorteilhafte Weiterbildungen und Verbesserungen der im unabhängigen Anspruch angegebenen elektrischen Maschine möglich. Dabei ist es zweckmäßig, wenn die Aussparungen sowohl achssymmetrisch angeordnet als auch achssymmetrisch mit Permanentmagneten bestückt werden. Hierdurch erreicht man, dass keine magnetischen Unsymmetrien und/oder Unwuchten im Rotor entstehen. Vorzugsweise sind die mit Permanentmagneten bestückten Aussparungen am Rotorumfang taschenförmig ausgebildet, wodurch eine einfache Befestigung und sichere Arretierung der Permanentmagnete gewährleistet ist. Die nicht mit Permanentmagneten zu bestückenden Aussparungen am Rotorumfang sind dagegen vorzugsweise als offene Einbuchtungen im Blechschnitt der Rotorbleche berücksichtigt, wodurch störende Streuflüsse über den äußeren, entlang des Luftspaltes verlaufenden Steg der Taschen vermieden werden.

Weiterhin hat es sich als zweckmäßig erwiesen, wenn die Außenkonturen der Rotorpole entsprechend einer Sinusfunktion gestaltet sind, wie dies zum Beispiel in der dritten Auflage des ersten Bandes "Elektrische Maschinen", S'en 168-171, von Rudolf Richter beschrieben ist, welcher im Birkhäuser Verlag, Basel erschienen ist. Andere Polformen, beispielsweise entsprechend einer 1/cos-Funktion, wie sie in der DE 103 147 63 A1 für Ständerzähne offenbart ist, sind ebenfalls möglich oder auch einfache Anfasungen an den Polkanten, wobei jeweils durch die Aufweitung des Luftspaltes zu den Polkanten hin das Rastmoment der Maschine, die Momentenschwankungen unter Last und die induzierte Spannungskurve beeinflusst werden können.

Weiterhin ist es vorteilhaft, wenn das elektrische Erregerfeld des Rotors zweipolig oder vierpolig ausgebildet ist mit vorzugsweise jeweils zwei, beidseitig der Rotorwelle angeordneten Spulen. Hierdurch kann einerseits beim Wickeln des Rotors dessen Welle leicht umgangen und bei einer zweipoligen Erregung gleichzeitig mit einer einzigen, vorzugsweise in der vorgenannten Art aufgeteilten Erregerspule mit niedrigem Kupferquerschnitt die benötigte Durchflutung und Erregerleistung erzielt werden.

Weitere Einzelheiten und Ausgestaltungen der Erfindung ergeben sich aus den Unteransprüchen und der Beschreibung der Ausführungsbeispiele.

### Kurze Beschreibung der Zeichnungen

Ausführungsbeispiele der Erfindung sind in den Zeichnungen dargestellt und in der nachfolgenden Beschreibung näher erläutert.

Es zeigen
- Figur 1: einen Längsschnitt durch einen Wechselstromgenerator für Kraftfahrzeuge mit einem hybriderregten Rotor in Polwechselanordnung,
- Figur 2: ein Schaltbild einer erfindungsgemäßen Maschine mit einer Brückenschaltung eines fünfphasigen Stators in einer Anordnung als fünfzackiger Stern,
- Figur 3: einen Querschnitt durch den magnetisch aktiven Teil einer erfindungsgemäßen elektrischen Maschine,
- Figuren 4a-4d: den Rotorblechschnitt und die geteilte Erregerspule einer erfindungsgemäßen Maschine mit 14 Polen, wobei die Polzahl durch Änderung der Bestückung mit Permanentmagneten auf 2 Pole reduzierbar ist, und die
- Figuren 5a-5c: den Rotorblechschnitt einer erfindungsgemäßen Maschine mit 12 Polen und zwei getrennten, gegensinnig bestromten Erregerspulen, deren Polzahl durch Veränderung der Bestückung mit Permanentmagneten auf 4 Pole reduzierbar ist.

### Auführungsformen der Erfindung

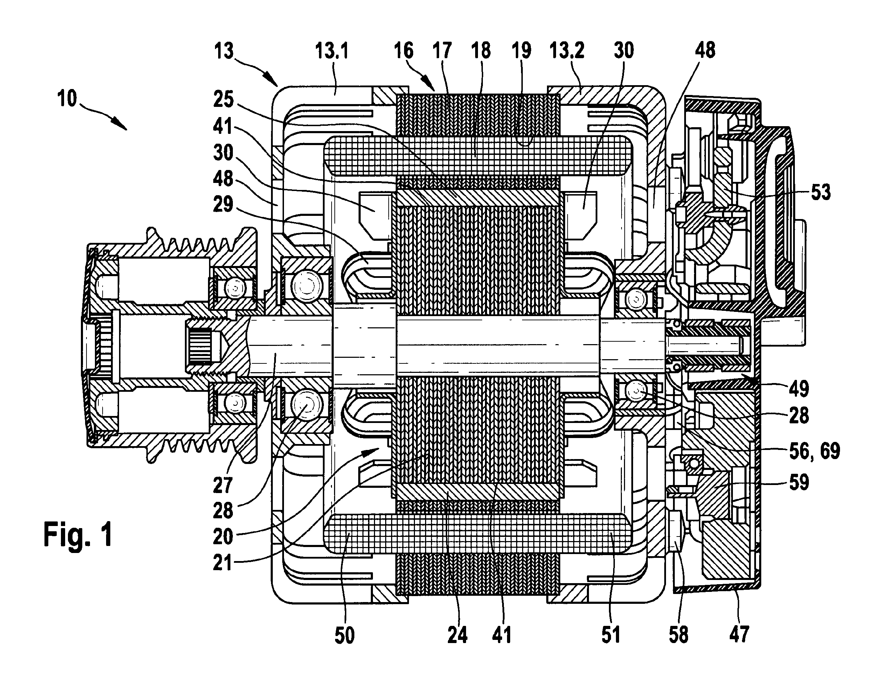

In Figur 1 ist ein Schnitt durch eine elektrische Maschine 10 in der Ausführung als Wechselstromgenerator für Kraftfahrzeuge dargestellt. Dieser weist ein zweiteiliges Gehäuse 13 auf, das aus einem ersten Lagerschild 13.1 und einem zweiten Lagerschild 13.2 besteht. Der Lagerschild 13.1 und der Lagerschild 13.2 nehmen einen Stator 16 auf, mit einen kreisringförmigen Statorblechpaket 17, in dessen nach innen offene und sich axial erstreckende Nuten 19 eine Statorwicklung 18 eingelegt ist. Der ringförmige Stator 16 umgibt mit seiner radial nach innen gerichteten Oberfläche einen Rotor 20, der als hybriderregter Rotor ausgebildet ist. Der Stator 16 wirkt hierbei über einen Arbeitsluftspalt mit dem im Stator 16 drehbar gelagerten Rotor 20 zusammen.

Der Rotor 20 weist über seinen Umfang in einer vorgegebenen Folge mehrere Nordpole N und Südpole S auf, die durch Permanentmagnete 24, 25 sowie durch die Erregerwicklung 29 ausgebildet werden. Dabei lässt sich die Polzahl des Rotors 20 in Abhängigkeit von der Stärke und Richtung eines Erregerstromes Ie in der Erregerwicklung 29 und durch die Zahl der eingesetzten Permanentmagneten verändern.

Der Rotor 20 besitzt einen magnetisch leitfähigen Körper, der als Blechpaket 21 ausgebildet ist. Das Rotorblechpaket ist in Achsrichtung laminiert mit einer Blechstärke zwischen 0,1 mm und 2,0 mm. Unterhalb 0,1 mm ist die Widerstandsfähigkeit des Blechpaketes 21 gegen Fliehkräfte zu gering. Oberhalb von 2,0 mm ist die Verringerung des Wirbelstromverluste auf der Außenfläche des Rotors 20 nicht mehr ausreichend, so dass die eingebauten Permanentmagnete 24, 25 geschädigt, beziehungsweise entmagnetisiert werden können.

Die axiale Länge des Rotorblechpaketes 21 entspricht vorzugsweise der axialen Länge des kreisringförmigen Statorblechpaketes 17, beziehungsweise ist für einen Toleranzausgleich bis zu 2 mm länger oder kürzer als das Statorblechpaket 17 und wird vorzugsweise durch Schweißnähte zusammengehalten. Es können statt Schweißungen auch Nieten, beziehungsweise Knöpfungen eingesetzt werden.

Die Erregerwicklung 29 ist beispielhaft bei der zweipoligen Variante als Durchmesserspule ausgebildet und liegt in Nuten, die aus dem Blechpaket 21 ausgestanzt sind. Die Erregerwicklung 29 kann z.B. als Flyerwicklung (Doppelflyer) direkt in das Rotorblechpaket 21 eingewickelt werden. Des Weiteren sind in dem Rotorblechpaket Bereiche 41 ausgespart, in die Permanentmagnete 24, 25 eingesetzt werden können.

Erfindungsgemäß werden die Magnete 24, 25 vorzugsweise in ausgestanzte Taschen 43 im Rotorblechpaket eingesetzt. Hierdurch ist es möglich, die im Betieb auftretenden Fliehkräfte aufzunehmen und dadurch einen sicheren Halt der Magnete auf dem Rotor zu gewährleisten. Als Magnetmaterial erweist sich ein Material mit einer Remanenzinduktion von größer 1 T als besonders vorteilhaft. Diese magnetischen Eigenschaften weisen insbesondere Permanentmagnete aus Seltenerde-Material auf. Die Magnete werden hierbei in den Rotor derart eingebaut, dass sie ein im Wesentlichen radiales Feld erzeugen. Dieses Feld tritt dann vom Rotor über den Luftspalt in das Statorblechpaket ein und induziert bei Drehung des Rotors eine Spannung in den Wicklungen des Stators.

Der Rotor 20 ist mittels einer Welle 27 und je einem auf je einer Rotorseite befindlichen Wälzlager 28 in den jeweiligen Lagerschilden 13.1 beziehungsweise 13.2 drehbar gelagert. Er weist zwei axiale Stirnflächen auf, an denen jeweils ein Lüfter30 befestigt ist. Diese Lüfter bestehen im Wesentlichen aus einem plattenförmigen, beziehungsweise scheibenförmigen Abschnitt, von dem Lüfterschaufel in bekannter Weise ausgehen. Die Lüfter 30 dienen dazu, über Öffnungen 48 in den Lageschilden 13.1 und 13.2 einen Luftaustausch zwischen der Außenseite und dem Innenraum der elektrischen Maschine 10 zu ermöglichen. Dazu sind Öffnungen 48 an den axialen Enden der Lagerschilde 13.1 und 13.2 vorgesehen, über die mittels der Lüfter 30 Kühlluft in den Innenraum der elektrischen Maschine 10 eingesaugt wird. Diese Kühlluft wird durch die Rotation der Lüfter 30 radial nach außen beschleunigt, so dass sie durch die kühlluftdurchlässigen Wickelköpfe 50 auf der Antriebsseite und 51 auf der Elektronikseite hindurchtreten kann. Durch diesen Effekt werden die Wickelköpfe 50, 51 gekühlt. Die Kühlluft nimmt nach dem Hindurchtreten durch die Wickelköpfe 50, 51, beziehungsweise nach dem Umströmen der Wickelköpfe, einen Weg radial nach außen durch nicht dargestellte Öffnungen.

In Figur 1 auf der rechten Seite befindet sich eine Schutzkappe 47, die verschiedene Bauteile vor Umgebungseinflüssen schützt. So deckt diese Schutzkappe 47 eine Schleifringbaugruppe 49 ab, welche die Erregerwicklung 29 mit Erregerstrom versorgt. Um diese Schleifringbaugruppe 49 herum ist ein Kühlkörper 53 angeordnet, der hier als Pluskühlkörper wirkt, an dem Plusdioden 59 montiert sind. Als sogenannter Minuskühlkörper wirkt der Lagerschild 13.2. Zwischen dem Lagerschild 13.2 und dem Kühlkörper 53 ist eine Anschlussplatte 56 angeordnet, welche im Lagerschild 13.2 befestigte Minusdioden 58 und Plusdioden 59 in Form einer Brückenschaltung 69 miteinander verbindet.

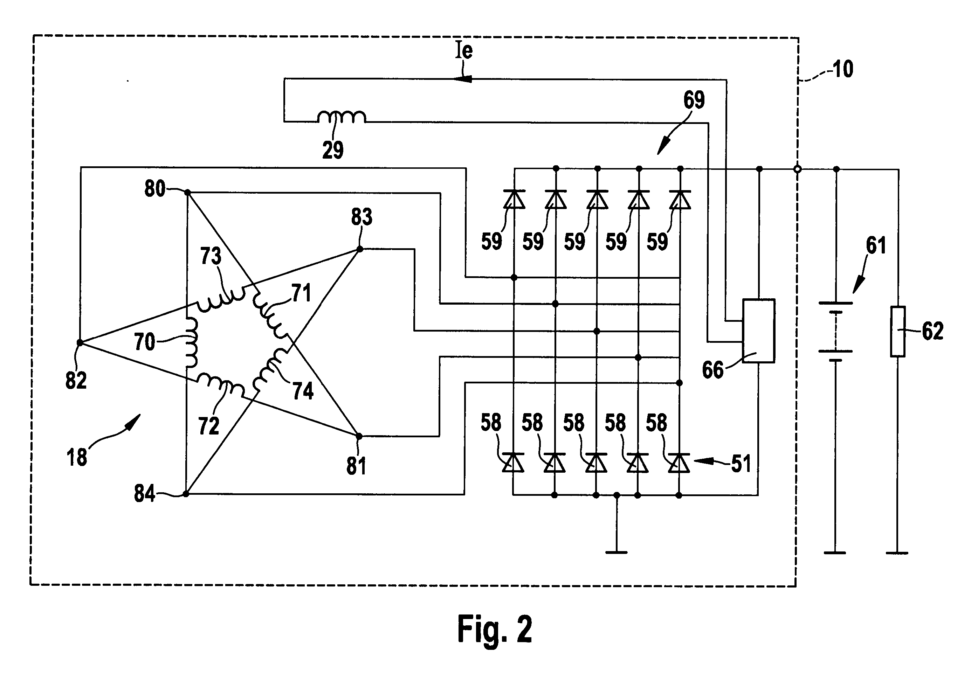

In Figur 2 ist ein Wechselstromgenerator 10 mit fünf phasenbildenden Wicklungssträngen 70, 71, 72, 73,74 anhand eines Schaltbildes dargestellt. Die Gesamtheit aller Wicklungsstränge 70, 71,72,73,74 bildet die Statorwicklung 18. Die fünf phasenbildenden Wicklungsstränge sind zu einer Grundschaltung als fünfzackiger Stern (Drudenfuß) verschaltet, wobei die jeweils in den Zacken des Sterns verschalteten Stränge einen Winkel von cirka 36° el. einschließen. An den Verschaltungspunkten 80, 81, 82, 83, 84 der Zacken des fünfzackigen Sterns ist ein Brückengleichrichter 69 angeschlossen.

Die Wicklungsstränge 70 bis 74 sind wie folgt verschaltet:
Der Wicklungsstrang 70 ist am Verschaltungspunkt 80 mit dem Wicklungsstrang 71 verbunden. Der Wicklungsstrang 71 ist an seinem gegenüber liegenden Ende am Verschaltungspunkt 81 mit dem Wicklungsstrang 72 verbunden. Der Wicklungsstrang 72 ist an seinem gegenüber liegenden Ende am Verschaltungspunkt 82 mit dem Wicklungsstrang 73 verbunden. Der Wicklungsstrang 73 ist an seinem gegenüber liegenden Ende am Verschaltungspunkt 83 mit dem Wicklungsstrang 74 verbunden. Der Wicklungsstrang 74 ist an seinem gegenüber liegenden Ende am Verschaltungspunkt 84 mit dem Wicklungsstrang 70 verbunden. Die Verschaltungspunkte befinden sich vorzugsweise axial auf oder neben dem elektronikseitigen Wickelkopf 51, um möglichst kurze Verschaltungswege zu realisieren. Hierzu treten die jeweils zu verschaltenden Anschlussdrähte der Wicklungsstränge 70 bis 74 eines Verschaltungspunktes 80 bis 84 vorzugsweise aus in Umfangsrichtung direkt benachbarten Nuten 19 aus. Die Verschaltungspunkte 80 bis 84 der Wicklungsstränge 70 bis 74 sind mit dem Brückengleichrichter 69 verbunden, der aus fünf Minusdioden 58 und fünf Plusdioden 59 aufgebaut ist. Gleichspannungsseitig ist ein Spannungsregler 66 parallel geschaltet, der durch Beeinflussung des Stromes Ie durch die Erregerwicklung 29 die Spannung des Generators regelt. Zusätzlich kann der Spannungsregler noch eine Verbindung zum Gleichrichter aufweisen, um den Spannungsabfall über einer Diode zu messen und hieraus die aktuelle Drehzahl des Generators zu ermitteln.

Das Bordnetz eines Fahrzeuges ist schematisch durch die Fahrzeugbatterie 61 und durch einen Verbraucher 62 dargestellt. Zur Verbesserung der Regelung kann die Erregerwicklung 29 alternativ mit Hilfe von vier Endstufen angesteuert werden, die zu einer H-Brückenschaltung verbunden sind. Hierdurch wird es möglich, in die Erregerwicklung 29 auch negative Erregerströme einzuprägen. Dies ergibt Vorteile beim Abregeln der Leistung des Generators, beziehungsweise in Bezug auf die Regelgeschwindigkeit, da zum schnellen Abregeln auch negative Spannungen an die Erregerwicklung 29 angelegt werden können.

Selbstverständlich lassen sich auch andere Phasenzahlen und Verschaltungsarten in bekannter Weise darstellen. Besonders zu erwähnen sind hierzu dreiphasige und sechsphasige Systeme in Stern- oder Dreieckschaltung, wie sie beispielsweise in der eingangs genannten älteren DE-Patentanmeldung 10 2007 025 971.0 näher erläutert sind.

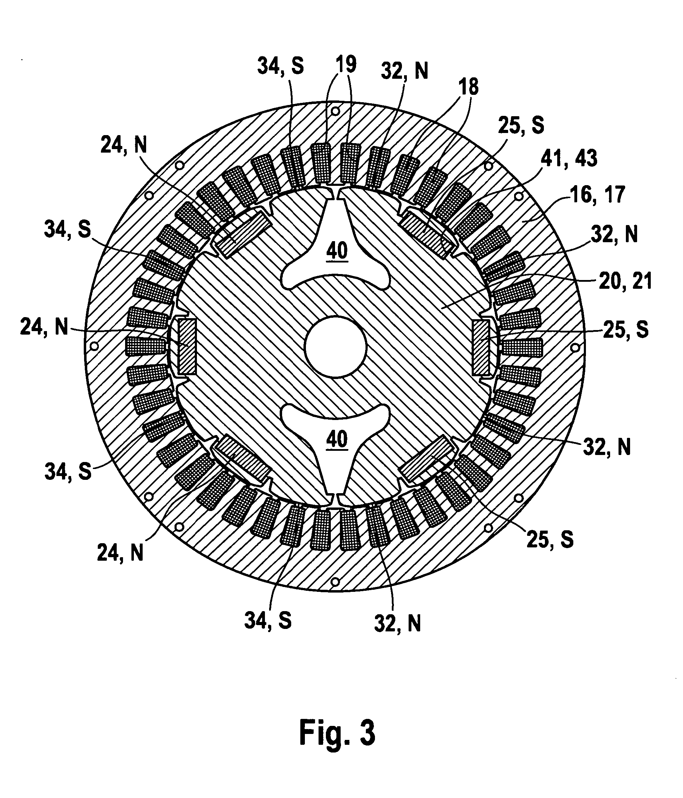

In Figur 3 ist schematisch der magnetisch aktive Teil einer elektrischen Maschine mit 14 Polen dargestellt, welche auf zwei Pole umschaltbar ist. Die Abbildung zeigt einen Rotor 20, beziehungsweise ein Rotorblech 21, mit zwei Nuten 40, an dessen Umfang acht elektrisch erregbare Pole 32 beziehungsweise 34 ausgebildet sind. Die Erregerwicklung 29 ist in dieser Abbildung der Übersichtlichkeit wegen nicht gezeichnet, die elektrisch erregbaren Pole 32 auf der rechten Rotorhälfte sind dennoch als Nordpole und die elektrisch erregbaren Pole 34 auf der linken Rotorseite als Südpole gekennzeichnet. Zwischen den elektrisch erregbaren Polen 32 und 34 sind die Permanentmagnete 24 und 25 in Taschen 43 gehalten, welche in ausgesparten Bereichen 41 zwischen den elektrisch erregbaren Polen 32 und 34 aus den Rotorblechen 21 ausgestanzt sind. In den Taschen 43 sind die Permanentmagnete sicher gehalten, insbesondere gegen die hohen Fliehkräfte im Betrieb der Maschine. Dabei sind die Permanentmagnete 24 und 25 derart ausgerichtet, dass sich ihre Polarität am Luftspalt jeweils mit der Polarität der benachbarten elektrisch erregbaren Pole 32 und 34 abwechselt. Dies bedeutet, dass die Permanentmagnete so angeordnet sind, dass zwischen den Nordpole ausbildenden elektrischen Polen 32 auf der rechten Rotorseite von den Permanentmagneten 25 am Luftspalt jeweils ein Südpol (S) ausgebildet wird, während auf der linken Rotorhälfte die Permanentmagnete 24 so angeordnet sind, dass sie zwischen den Südpole ausbildenden, elektrisch erregten Polen 34 am Luftspalt jeweils einen Nordpol (N) bilden.

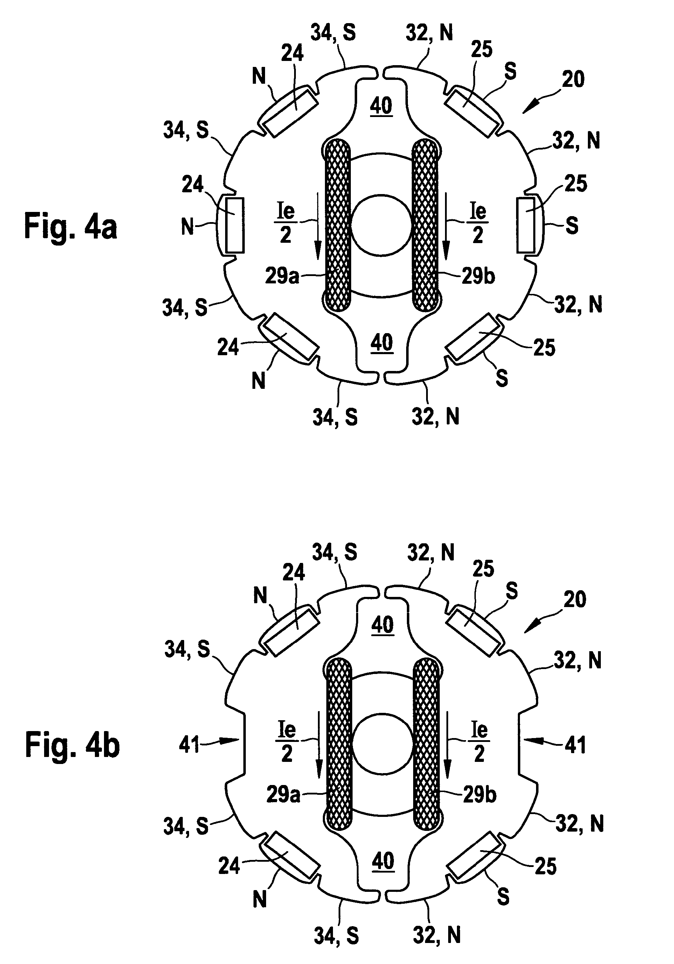

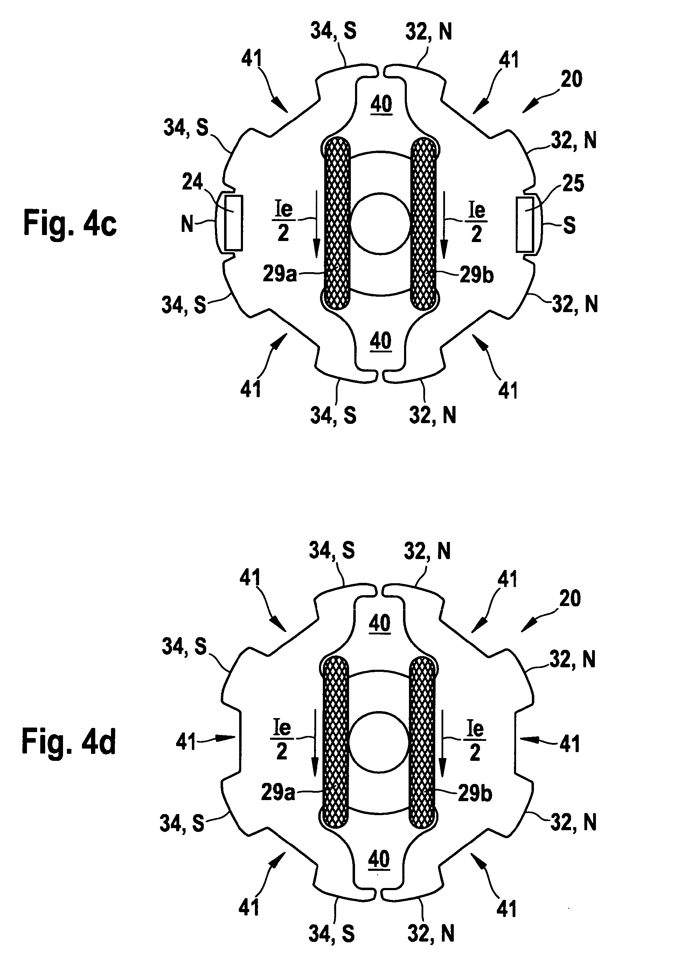

Figur 4 zeigt den Rotor 20 einer gemäß Figur 3 aufgebauten elektrischen Maschine mit einem zweipoligen Erregergrundfeld. Die Erregerwicklung 29 ist in zwei gleiche Spulen 29a und 29b aufgeteilt, die beidseitig der in Figur 4 nicht dargestellten Rotorwelle 27 angeordnet und bei Parallelschaltung jeweils vom halben Erregerstrom Ie/2, bei Reihenschaltung vom vollen Erregerstrom Ie gleichsinnig durchflossen sind. Die Permanentmagnete 24 und 25 sind in gleicher Weise wie in Figur 3 angeordnet und gepolt, so dass sich bei einer Vollbestückung des Rotors mit Permanentmagneten entsprechend der Anordnung in Figur 4a wiederum eine Magnetisierung entsprechend Figur 3 ergibt mit insgesamt 14 Polen, von denen acht elektrisch und sechs permanentmagnetisch erregt sind. Zur Erzielung einer hohen Leistungsdichte der elektrischen Maschine werden hierbei als Permanentmagnete vorzugsweise Seltenerd-Magnete eingesetzt.

Bei geringeren Anforderungen an die Leistungsdichte können statt der Seltenerd-Magnete jedoch auch Ferrit-Magnete als Permanentmagnete verwendet werden. Dies gilt für alle dargestellten Ausführungen des Rotors 20.

Die Abbildungen 4b, 4c und 4d zeigen drei Alternativen hinsichtlich der Bestückung des Rotors 20 mit Permanentmagneten.

In Abbildung 4b sind die ausgesparten Bereiche 41 in der wagerechten Achse des Rotors nicht mit Permanentmagneten bestückt, so dass in diesem Bereich jeweils zwei elektrisch erregte Nord- beziehungsweise Südpole 32, 34 durch eine Aussparung 41 mit hohem magnetischen Widerstand einander benachbart sind. Der Aufbau der Statorwicklung 18 bleibt 14-polig.

Weitere Bestückungsmöglichkeiten des Rotors 20 mit Magnetpolen sind in den Abbildungen 4c und 4d dargestellt. In der Abbildung 4c sind nur noch zwei Permanentmagnetpole in der wagerechten Ausrichtung vorgesehen, wodurch hier auf jeder Rotorhälfte jeweils zweimal zwei elektrisch erregte Nord- beziehungsweise Südpole 32, 34 durch Aussparungen 41 mit hohem magnetischen Widerstand einander benachbart sind. In der Ausführung gemäß Abbildung 4d verbleiben nur noch die elektrisch erregten Pole 32, 34 sowie die Aussparungen 41. Der Aufbau der Statorwicklung 18 ist auch bei diesen Ausführungen 14-polig.

Die Gesamtanordnung des Rotors 20 der elektrischen Maschine ist in allen Fällen achssymmetrisch gestaltet um elektrische und mechanische Unsymmetrien weitestgehend zu vermeiden. In den Fällen, in denen in den ausgesparten Bereichen 41 keine Permanentmagnete 24 oder 25 angeordnet werden, sind in den Aussparungen 41 keine Taschen ausgebildet sondern lediglich der Rotorumfang entsprechend den Abmessungen der Taschen reduziert, sodass magnetische Kurzschlussstrecken über die Außenwände nicht bestückter Taschen vermieden werden. Die Außenkonturen der elektrisch erregten Pole 32, 34 sowie der Taschen 43 ist entsprechend einer Sinusfunktion gestaltet, wodurch sich eine Aufweitung des Luftspaltes zu den Polkanten hin ergibt, die Momentenschwankungen im Betrieb der Maschine, insbesondere unter Last, reduziert.

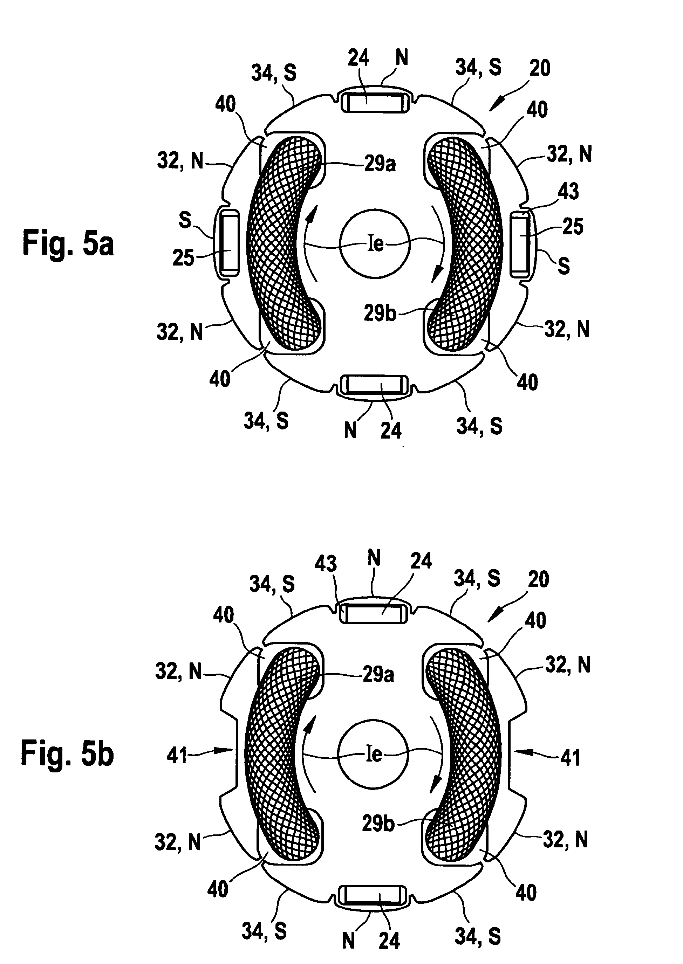

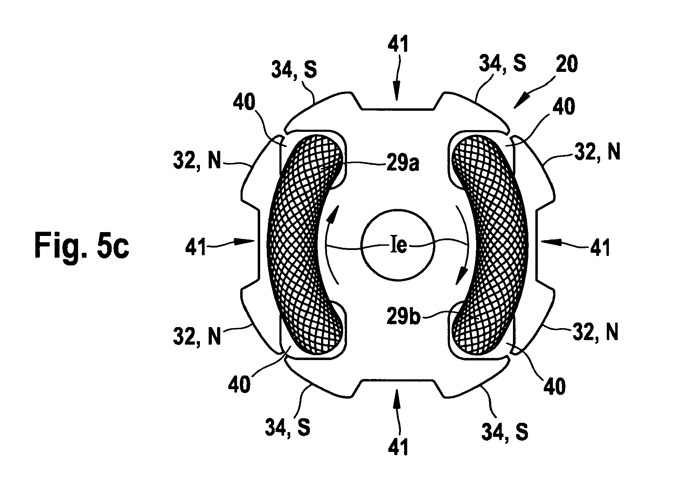

Die Figuren 5a, 5b und 5c zeigen eine Ausführung des Rotors 20 mit zwei getrennten, gegensinnig bestromten Erregerspulen 29a und 29b, welche jeweils den Erregerstrom Ie führen und gemeinsam die Erregerwicklung 29 für ein vierpoliges Grundfeld bilden. Mit dem dargestellten Blechschnitt bildet der Rotor bei rein elektrischer Erregung entsprechend Figur 5c vier Pole aus mit zwei Nordpolen 32 und zwei Südpolen 34, welche jeweils zwei Polschuhe aufweisen mit dazwischen liegenden Aussparungen 41, die entsprechend den Ausführungen der Figuren 3 und 4 mit Permanentmagneten 24 und 25 entsprechend der geforderten Leistungsdichte der Maschine bestückt werden können. So sind in der Abbildung 5a vier Taschen 43 in den ausgesparten Bereichen 41 mit vier Permanentmagneten 24 und 25 bestückt, welche derart gepolt sind, dass sie zwischen den elektrischen Teilpolen 32, beziehungsweise 34 entgegengerichtete Pole ausbilden, wodurch der Rotor insgesamt eine zwölfpolige Magnetisierung erhält. Diese kann gemäß Abbildung 5b durch eine Bestückung mit nur zwei Permanentmagneten 24 in der senkrechten Achse oder gemäß Abbildung 5c gänzlich ohne Permanentmagnete mit rein elektrischer Erregung erfolgen, wobei wiederum die unbestückten Aussparungen 41 nicht als Taschen sondern nur als Vertiefungen ausgebildet sind. Die Statorwicklung bleibt 12-polig aufgebaut.

Bei allen dargestellten Ausführungsformen der erfindungsgemäßen elektrischen Maschine bleibt deren Funktion auch bei einer nur teilweisen Bestückung des Rotors 20 mit Permanentmagneten erhalten. Entsprechend der Reduzierung der Permanentmagnetbestückung sinkt jedoch der Wert der induzierten Spannung im Stator 16 der Maschine und damit die Leistungsausbeute, beziehungsweise die Leistungsdichte der Maschine. Andererseits kann hierdurch mit dem einfachen Mittel einer Teilbestückung oder alternativ auch mittels einer gemischten Bestückung mit unterschiedlichen Magneten oder nur mit preiswerten Magneten eine Skalierung zu kleineren Maschinenleistungen hin bei deutlichen Preisvorteilen erreicht werden.

## Patentansprüche

1. Elektrische Maschine, insbesondere Generator zur Speisung des Bordnetzes eines Kraftfahrzeuges, mit einem geblechten Stator (16) mit einer mehrphasigen Statorwicklung (18) und mit einem geblechten Rotor (20), der durch eine in Nuten (40) des Rotors (20) liegende Erregerwicklung (29) erregbar ist und der an seinem Umfang elektrisch erregte Pole (32, 34) und Aussparungen (41, 43) aufweist, wobei zwischen dem Stator (16) und dem im Stator (16) drehbar gelagerten Rotor (20) ein Luftspalt ist,
**dadurch gekennzeichnet, dass**
- entweder ein Teil der Aussparungen (41, 43) mit Permanentmagneten (24, 25) bestückt ist, welche ein radiales Feld erzeugen, und die Permanentmagnete (24, 25) derart ausgerichtet sind, dass sich ihre Polarität am Luftspalt jeweils mit der Polarität der benachbarten elektrisch erregbaren Pole (32, 34) abwechselt, und ein Teil der Aussparungen (41, 43) unbestückt ist,
- oder keine der Aussparungen (41, 43) bestückt ist,
- wobei die Aussparungen (41, 43) von zwei elektrisch erregten Polen (32, 34) benachbart sind, die die gleiche Polung aufweisen.

2. Elektrische Maschine nach Anspruch 1, **dadurch gekennzeichnet, dass** die Aussparungen (41, 43) achssymmetrisch angeordnet sind.

3. Elektrische Maschine nach Anspruch 1 oder 2, **dadurch gekennzeichnet, dass** die bestückten Aussparungen (41,43) mit Seltenerd-Magneten (24,25) bestückt sind.

4. Elektrische Maschine nach Anspruch 1 oder 2, **dadurch gekennzeichnet, dass** die bestückten Aussparungen (41, 43) mit Seltenerd-Magneten (24, 25) und/oder mit Ferritmagneten (24,25) bestückt sind.

5. Elektrische Maschine nach einem der vorhergehenden Ansprüche, **dadurch gekennzeichnet, dass** die mit Permanentmagneten (24, 25) bestückten Aussparungen (41, 43) am Rotorumfang taschenförmig (43) ausgebildet sind.

6. Elektrische Maschine nach einem der vorhergehenden Ansprüche, **dadurch gekennzeichnet, dass** die nicht mit Permanentmagneten bestückten Aussparungen (41, 43) am Rotorumfang als offene Einbuchtungen ausgebildet sind.

7. Elektrische Maschine nach einem der vorhergehenden Ansprüche, **dadurch gekennzeichnet, dass** die Außenkontur der Rotorpole (24, 25; 32, 34) derart gestaltet ist, dass ein sinusförmiger Feldverlauf entsteht.

8. Elektrische Maschine nach einem der vorhergehenden Ansprüche, **dadurch gekennzeichnet, dass** das elektrische Erregerfeld des Rotors (20) zweipolig ist.

9. Elektrische Maschine nach Anspruch 8, **dadurch gekennzeichnet, dass** die Erregerwicklung (29) des Rotors (20) in zwei beidseitig der Rotorwelle (27) angeordnete Spulen (29a, 29b) aufgeteilt ist.

10. Elektrische Maschine nach einem der Ansprüche 1 bis 7, **dadurch gekennzeichnet, dass** das elektrische Erregerfeld des Rotors (20) vierpolig ausgebildet ist mit zwei getrennten Spulen (29a, 29b) in vier Nuten (40).

## Claims

1. Electrical machine, in particular generator for feeding an on-board electrical system of a motor vehicle, having a laminated stator (16) with a polyphase stator winding (18) and having a laminated rotor (20) which can be excited with a field winding (29) situated in slots (40) in the rotor (20) and which has electrically excited poles (32, 34) and cutouts (41, 43) over its circumference, wherein an air gap is formed between the stator (16) and the rotor (20) which is rotatably mounted in the stator (16),
**characterized in that**
- either some of the cutouts (41, 43) are populated with permanent magnets (24, 25) which produce a radial field, and the permanent magnets (24, 25) are oriented in such a way that the polarity of said permanent magnets at the air gap respectively alternates with the polarity of the adjacent electrically excitable poles (32, 34), and some of the cutouts (41, 43) are not populated,
- or none of the cutouts (41, 43) is populated,
- wherein the cutouts (41, 43) of two electrically excited poles (32, 34) which have the same polarity are adjacent.

2. Electrical machine according to Claim 1, **characterized in that** the cutouts (41, 43) are arranged in an axially symmetrical manner.

3. Electrical machine according to Claim 1 or 2, **characterized in that** the populated cutouts (41, 43) are populated with rare-earth magnets (24, 25).

4. Electrical machine according to Claim 1 or 2, **characterized in that** the populated cutouts (41, 43) are populated with rare-earth magnets (24, 25) and/or with ferrite magnets (24, 25).

5. Electrical machine according to one of the preceding claims, **characterized in that** the cutouts (41, 43) which are populated with permanent magnets (24, 25) are formed in a pocket-like manner (43) over the rotor circumference.

6. Electrical machine according to one of the preceding claims, **characterized in that** the cutouts (41, 43) which are not populated with permanent magnets are formed as open recesses over the rotor circumference.

7. Electrical machine according to one of the preceding claims, **characterized in that** the outer contour of the rotor poles (24, 25; 32, 34) is configured in such a way that a sinusoidal field profile is produced.

8. Electrical machine according to one of the preceding claims, **characterized in that** the electrical excitation field of the rotor (20) has two poles.

9. Electrical machine according to Claim 8, **characterized in that** the field winding (29) of the rotor (20) is divided into two coils (29a, 29b) which are arranged on both sides of the rotor shaft (27).

10. Electrical machine according to one of Claims 1 to 7, **characterized in that** the electrical excitation field of the rotor (20) is of four-pole form with two separate coils (29a, 29b) in four slots (40).

## Revendications

1. Machine électrique, en particulier générateur pour alimenter le réseau de bord d'un véhicule automobile, avec un stator feuilleté (16) avec un bobinage de stator polyphasé (18) et avec un rotor feuilleté (20) qui peut être excité par un bobinage d'excitation (29) situé dans les rainures (40) du rotor (20) et comporte sur sa périphérie des pôles excités électriquement (32, 34) et des évidements (41, 43), un entrefer étant formé entre le stator (16) et le rotor (20) logé pouvant tourner dans le stator (16)
**caractérisée en ce que**
- soit une partie des évidements (41, 43) est équipée d'aimants permanents (24, 25), qui produisent un champ radial et les aimants permanents (24, 25) sont orientés de telle manière que leur polarité sur l'entrefer alterne respectivement avec la polarité des pôles voisins électriquement excitables (32, 34) et une partie des évidements (41, 43) n'est pas équipée,
- soit aucun évidement (41, 43) n'est équipé,
- pour laquelle les évidements (41, 43) sont adjacents à deux pôles excités électriquement (32, 34) qui comportent la même polarité.

2. Machine électrique selon la revendication 1 **caractérisée en ce que** les évidements (41, 43) sont disposés de façon symétrique à l'axe.

3. Machine électrique selon la revendication 1 ou 2 **caractérisée en ce que** les évidements (41, 43) équipés sont équipés d'aimants à terres rares (24, 25).

4. Machine électrique selon la revendication 1 ou 2 **caractérisée en ce que** les évidements équipés (41, 43) sont équipés d'aimants à terres rares (24, 25) et/ou d'aimants de ferrite (24, 25).

5. Machine électrique selon l'une quelconque des revendications précédentes **caractérisée en ce que** les évidements (41, 43) équipés d'aimants permanents (24, 25) sont constitués en forme de poches (43) sur la périphérie du rotor.

6. Machine électrique selon l'une quelconque des revendications précédentes **caractérisée en ce que** les évidements (41, 43) non équipés d'aimants permanents sont constitués comme des creux ouverts sur la périphérie du rotor.

7. Machine électrique selon l'une quelconque des revendications précédentes **caractérisée en ce que** le contour extérieur des pôles de rotor (24, 25; 32, 34) est structuré de telle manière qu'il se forme une répartition de champ de forme sinusoïdale.

8. Machine électrique selon la revendication 1 selon l'une quelconque des revendications précédentes **caractérisée en ce que** le champ d'excitation électrique du rotor (20) est bipolaire.

9. Machine électrique selon la revendication 8 **caractérisée en ce que** le bobinage d'excitation (29) du rotor (20) est divisé en deux bobines (29a, 29b) disposées des deux côtés de l'arbre (27) de rotor.

10. Machine électrique selon l'une quelconque des revendications 1 à 7 **caractérisée en ce que** le champ d'excitation électrique du rotor (20) est constitué de façon quadripolaire avec deux bobines séparées (29a, 29b) dans quatre rainures (40).
